# EUROPEAN PATENT SPECIFICATION

(11) **EP 0 526 023 B1**
(45) Date of publication and mention of the grant of the patent: **10.12.1997**
(21) Application number: 92306352.3
(22) Date of filing: 10.07.1992
(51) Int. Cl.: G02F 1/025, G02B 6/12, G02F 1/225, G02F 1/313

(54) **Semiconductor optical guided-wave device and its production method**
Optische Halbleiter-Wellenleitervorrichtung und ihr Herstellungsverfahren
Dispositif optique à guide d'onde en matériau semi-conducteur et son procédé de fabrication

(30) Priority: 10.07.1991 JP 168539/91
(43) Date of publication of application: 03.02.1993
(73) Proprietor: NEC CORPORATION, Tokyo (JP)
(72) Inventor: Komatsu, Keiro, Minato-ku, Tokyo 108-01 (JP)
(74) Representative: Abnett, Richard Charles

(56) References cited:
- PATENT ABSTRACTS OF JAPAN vol. 15, no. 166 25 April 1991 & JP-A-03 031 815 ( SEIKO ) 12 February 1991
- PATENT ABSTRACTS OF JAPAN vol. 15, no. 166 25 April 1991 & JP-A-03 031 814 ( SEIKO ) 12 February 1991
- PATENT ABSTRACTS OF JAPAN vol. 15, no. 47 5 February 1991 & JP-A-02 281 231 ( SEIKO ) 16 November 1990
- PATENT ABSTRACTS OF JAPAN vol. 15, no. 327 20 August 1991 & JP-A-03 119 311 ( NEC ) 21 May 1991
- JOURNAL OF THE INSTITUTION OF ELECTRONIC AND RADIO ENGINEERS vol. 57, no. 1, January 1987, LONDON GB pages 544 - 550 , XP000037888 S. RITCHIE ET AL. 'Optical waveguides in III-V semiconductors'

## Description

This invention relates to semiconductor optical guided-wave devices such as, for example, optical switches and optical modulators and a production method therefor.

Recently, optical switches and optical modulators have been found to be key elements in high-speed optical communication systems and optical information processing systems of the future and, as a result, much research and development has been undertaken. Under such circumstances, devices for this purpose using a dielectric material such as LiNbO₃ or the like, and those using a semiconductor such as GaAs, InP or the like, are known.

Recent demands for semiconductor optical switches and modulators are that they can be integrated with other optical elements, including optical amplifiers and/or electronic circuits including field effect transistors (FET), and that they can easily be made compact and multi-channelled. In order to fulfil these demands, considered from the viewpoint of the above mentioned fields of application, they are required to operate at high speed and at low levels of loss, power consumption and applied voltage, and to be easily highly integrated with other components.

The physical effects which can be used for semiconductor optical switches or modulators include a band filling effect or free carrier plasma effect whereby refractive index can be varied by applying an electric current, an electrooptic effect whereby refractive index is varied by applying a voltage, and a quantum confinement start effect (QCSE) whereby the refractive index varies, accompanied by a shift of an excitonic absorption peak, when a voltage is applied to a multiple quantum well. Other effects have also been identified. Many attempts and investigations are under way using these effects mentioned above. From such investigations, it has been pointed out that an optical switch or optical modulator using the band filling effect or free carrier plasma effect, controlled by the application of an electric injection current, suffers problems such as that the operating speed is low and the power consumption is large. It has also been found that in devices using the QCSE, as a result of the multiple quantum well structure the problem arises that the devices are difficult to operate at low loss levels.

On the other hand, an optical switch or optical modulator using the electrooptic effect tends to be longer in length than those utilizing the other effects. However, high-speed operation and power-saving operation, as well as low-loss operation, advantageously become possible. Referring to the low-loss operation requirement, an optical waveguide having a loss as low as 0.15 dB/cm with a wavelength of 1.52 µm has been realized utilizing a GaAs/AlGaAs system semiconductor as reported by E. Kapon and others in the "Journal of Applied Physics Letters" Vol.50, No. 23, pp. 1628 to 1630, 1987. It is possible to realise such a low-loss optical waveguide as above because the bandgap wavelengths of GaAs and AlGaAs are sufficiently short compared with the operating wavelengths of 1.3 and 1.5µm respectively. Therefore, the dependence of the electrooptic effect on the wavelength is small and as a result, even if the operating wavelength is different from the bandgap wavelength, the change in refractive index is not as different as that when it is in the vicinity of the bandgap wavelength. Besides, the low-loss optical waveguide reported as above was formed by a wet chemical etching method.

In the case mentioned above, a wet chemical etching method was used for forming the optical waveguide. This makes it possible to achieve low-loss operation, but it is not possible to use it to form a large surface area with good reproducibility. This means that it is difficult to use it to make an optical waveguide which is integrated into an optical device or to mass-produce discrete optical devices.

Application of a dry etching method instead of the wet chemical etching method makes it possible to form a fine optical waveguide over a large surface area with good reproducibility. With conventional dry etching technology however, it is unavoidable that slight irregularities are formed on an etched bottom surface and/or etched side surface, and that light propagated in the waveguide will be scattered by the slight irregularities. Thus the reduction of losses is limited. In addition, dry etching may cause damage to the etched bottom surface, which causes losses of propagated light. Consequently, it is difficult to make a semiconductor optical waveguide by the dry etching technique which achieves smaller losses than one prepared by the wet chemical etching technique.

Furthermore, for InP system material it has been pointed out that the dry etching technology itself is not yet satisfactorily established. This is because when an InP system material is dry-etched using a chlorine gas or a mixture of a chlorine gas and other gases (which are generally used in the dry etching of compound semiconductor materials such as, for example, GaAs), a chemically stable chloride, InCl₃, is generated which prevents the etching from progressing. As a result, it is difficult to obtain a practically acceptable etching speed. In order to restrain the generation of such a chemically stable chloride of indium it might be considered possible to restrain the chemical reactivity of the material by etching it mainly by a physical sputtering process. In this case, however, the damage to an etched bottom surface becomes undesirably large.

Recently, a technique whereby a methane system gas is introduced in dry-etching the InP system material has been proposed. However, if the methane system gas is used, contamination of the semiconductor material by carbon becomes unavoidable, leading to a further problem to be solved.

As explained above, optical guided-wave devices such as the semiconductor optical switch and optical modulator utilizing the electrooptic effect are promising. However, particularly because the dry etching technology itself is not yet fully established, a satisfactory technology for producing a fine, low-loss optical waveguide capable of application for large-scale integration of optical devices or mass production of single optical devices has not yet been established.

Japanese patent application JP-A-3119311 describes an optical modulator in which a stripe-shaped waveguide is formed on a (111) oriented substrate of GaAs/AlGaAs. The side planes of the waveguide are parallel to each other and extend perpendicularly from the substrate. Electrodes are provided for applying an electric field to vary the refractive indices of the layers of the structure by the primary electrooptical effect.

Japanese patent applications JP-A-3031814 and JP-A-3031815 describe optical switches in which waveguides are formed on GaAs substrates. The side planes of the waveguides are parallel to each other and extend perpendicularly from the substrates. The waveguides are of ZnS/ZnSe and are formed by selective epitaxial growth on the substrates in areas exposed by patterned SiO₂ mask layers. Electrodes are provided for applying electric fields to the waveguides in known manner.

Japanese patent application JP-A-2281231 describes an optical switch in which one layer of a multi-layer optical waveguide is formed on a substrate by selective epitaxial growth. The waveguide is formed of a II-VI compound semiconductor. The switch is controlled by injecting carriers into the optical waveguide via an electrode. The side planes of the waveguide are parallel to each other and extend perpendicularly from the substrate.

A paper by S. Ritchie et al. in the "Journal of the Institution of Electronic and Radio Engineers", vol. 57 (1987), No. 1 (Supplement), at pages S44 to S50 and entitled "Optical Waveguides in III-V Semiconductors" reviews the state of the art of making semiconductor waveguides, concentrating on the formation of raised rib waveguides. All the methods described involve the growth of thin epitaxial layers on a substrate followed by processing of the layers by etching to form the shape of the waveguide. A large number of methods are described as suitable for the layer growth step, being molecular beam epitaxy (MBE), liquid phase epitaxy (LPE), vapour phase epitaxy (VPE), and metal-organic vapour phase epitaxy (MOVPE). The methods described as suitable for processing the layers are wet chemical etching and dry chemical etching.

As explained above, optical guided-wave devices such as the semiconductor optical switch and optical modulator utilizing the electrooptic effect are promising. However, particularly because the dry etching technology itself is not yet fully established, a satisfactory technology for producing a fine, low-loss optical waveguide capable of application for large-scale integration of optical devices or mass production of single optical devices has not yet been established.

The invention provides a semiconductor optical guided-wave device and a method of manufacture as defined in the appendent independent claims, to which reference should now be made. Preferred features of the invention are defined in dependent subclaims.

The semiconductor optical guided-wave device of the invention has a ridge-type semiconductor optical waveguide formed by a crystal growth process, so that the optical waveguide may be preferably formed over a wide area with good reproducibility, thus making mass-production possible.

In addition, to effect the crystal growth process, a mask (made of, for example, thin dielectric film of SiO₂) may be patterned by an etching method and then a semiconductor selectively crystallographically grown to form an optical waveguide. It is thus unnecessary to etch the semiconductor. Fine patterning of a mask such as dielectric film is extremely easy to do compared with the etching of a semiconductor at a micrometre level of depth. As a result, it can be made fine in structure, leading to the possibility for integration.

According to the invention, the crystal plane of the substrate on which the grown structure is formed is the (100) plane and the crystal plane of the side surfaces of the ridge is the (111) plane. The fact that the side surfaces of the ridge are the (111) crystal plane is advantageous in that the scattering of light on these surfaces can be prevented.

In addition, all the surfaces of the ridge are smooth crystal planes, so that loss of light by scattering does not occur, and the semiconductor is not subjected to dry etching, so that losses caused by damage to the semiconductor induced by etching do not occur. It is therefore possible to operate the device at a low level of loss.

In one preferred embodiment, the semiconductor optical waveguide comprises grown layers including a first semiconductor cladding layer, a semiconductor guiding layer and a second semiconductor cladding layer grown in this order, and a ridge having a third semiconductor cladding layer and a semiconductor capping layer grown in this order on the second semiconductor cladding layer.

In another preferred embodiment, one optical waveguide is formed and by applying an electric field to the optical waveguide through the electrodes, incident light can be subjected to phase modulation. In this case, an optical phase modulator is provided.

In a further preferred embodiment, two optical waveguides are formed close to each other and an electric field can be applied through the electrodes to these two waveguides independently. Thus, by applying an electric field to these two optical waveguides, incident light can be switched. In this case, a directional coupler type optical switch is provided.

In a further preferred embodiment, the optical waveguide comprises a light branching section, a light combination section and two phase modulation sections formed therebetween, and the electrodes are disposed so as to apply an electric field to these two phase modulation sections independently. Thus, by applying an electric field to these two phase modulation sections independently incident light can be either switched or modulated. In this case, a Mach-Zehnder type optical switch or optical modulator is provided.

In the method of manufacture of the invention, a step of forming the ridge of the optical waveguide is realized preferably in such a manner that a mask having an opening at a position where the ridge is to be formed is patterned over a layer on which the ridge is to be formed, and then the ridge is made by a crystal growth process such as the metal organic vapor phase epitaxy (MOVPE) method. However, any other method may be used for this purpose if it can form the ridge in a selective crystal growth manner.

The mask to be used for crystal growth is preferably a dielectric film made of SiO₂, as a non-limiting example. Any other material may be used for this purpose if it can fulfil the same functions as above.

Such a mask is patterned preferably by etching using a photolithography technology, as a non-limiting example. However, any method may be used for this purpose if the film can be patterned to form a mask.

In a preferred embodiment, the step of forming the optical waveguide includes a step of growing a first semiconductor cladding layer, a semiconductor guiding layer and a second semiconductor cladding layer in this order. In this case, the ridge is formed on the second cladding layer.

Furthermore, in a preferred embodiment, the step of forming the ridge includes a step of growing a third semiconductor cladding layer and a semiconductor capping layer in this order.

The electrodes may be formed by any known method.

The formation of the layers described above on the semiconductor substrate can be achieved by using a thin film crystal growth method. Such as, typically, the MOVPE method.

The production method of this invention can be applied for the production of various optical guided-wave devices including an optical phase modulator, a directional-coupler-type optical switch, and a Mach-Zehnder-type optical switch or optical modulator, by appropriately changing the configuration of the mask and the arrangement of the electrodes.

Using the method of this invention, such optical guided-wave devices may be produced at a high level of yield. The devices may also be produced easily because of the advantage that the semiconductor etching is not required.

Fig. 1 is a perspective view of an InGaAsP/InP optical phase modulator, the description of which herein serves to describe a fabrication method of a ridge section of a device according to a preferred embodiment of the invention.

Figs. 2a to 2i are partial cross-sections showing a production method of the ridge section shown in Fig. 1.

Fig. 3 is a graph showing a phase modulation characteristic of the ridge section shown in Fig. 1.

Fig. 4 is a perspective view of an InGaAsP/InP directional-coupler-type optical switch according to a first embodiment of this invention.

Fig. 5 is a partial top view showing a mask pattern to be used for crystal growth of a ridge of the optical switch shown in Fig. 4.

Fig. 6 is a graph showing a switching characteristic of the optical switch shown in Fig. 4.

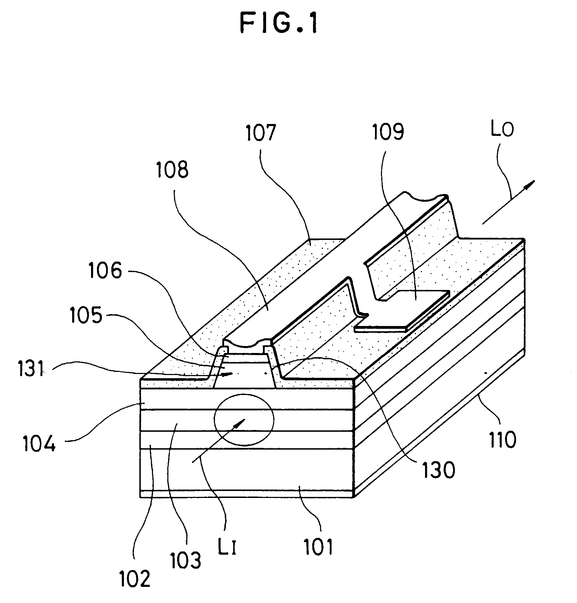

Fig. 1 is a perspective view of an InGaAsP/InP Mach-Zehnder type optical modulator according to a second embodiment of this invention.

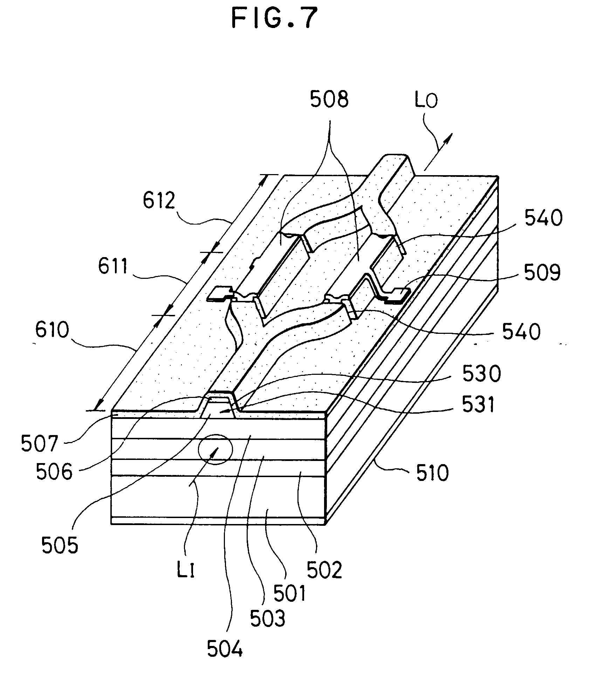

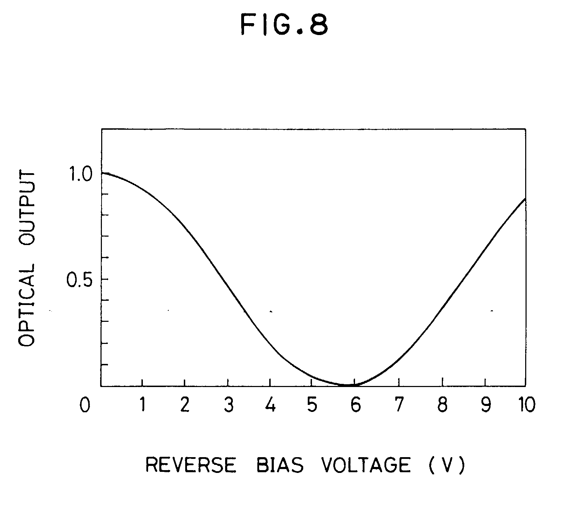

Fig. 8 is a graph showing an extinction characteristic of the optical modulator shown in Fig. 7.

Preferred embodiments of this invention will be described below while referring to the drawings attached.

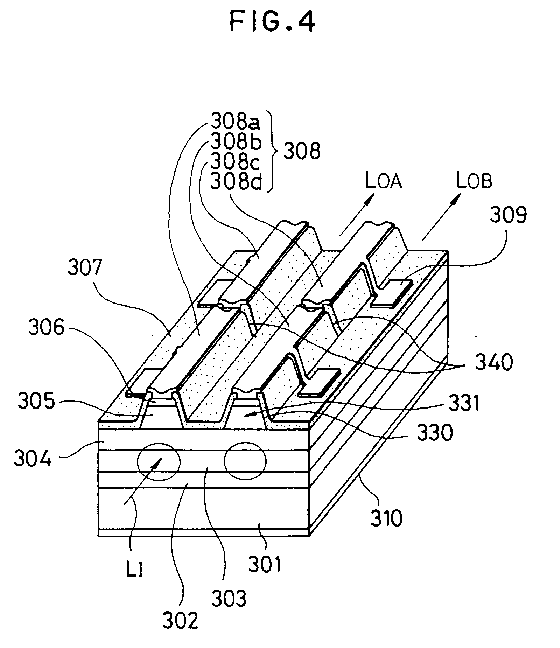

Figures 4 to 8 relate to embodiments of the invention in which ridge sections separated by grooves are formed over substrates. Figures 1 to 3 serve to illustrate a method for fabricating such a ridge section, which in Figures 1 to 3 takes the form of an InGaAsP/InP optical phase modulator.

With reference to Figure 1, on an n-type InP substrate 101 of the (100) plane orientation are grown, in order, an n-type InP cladding layer 102 with a thickness of about 1 µm, an i-type InGaAsP guiding layer 103 with a thickness of 0.3 µm and a wavelength composition of 1.15 µm and an i-type InP cladding layer 104 with a thickness of 0.3 µm. On the i-type InP cladding layer 104 is formed a ridge 131 comprising a p-type InP cladding layer 105 with a thickness of 0.6 µm and a p-type InGaAs capping layer 106 with a thickness of 0.2 µm. The ridge is of substantially trapezoidal cross-section and extends linearly longitudinally of the substrate 101. The ridge 131 extends along the [011] direction, and its width is 4 µm at a contact portion with the i-type InP cladding layer 104. Both sides 130 of the ridge 131 are smooth (111) B planes. The ridge 131 is formed by a selective crystal growth method.

Both sides 130 of the ridge 131 and the surface of the i-type InP cladding layer 104 (other than where covered by the ridge 131) is formed are covered with a SiO₂ film 107 as a protective film. The upper surface of the ridge 131 is not covered with the SiO₂ film 107, but covered with a p-side electrode 108 composed of titanium (Ti) and gold (Au). On the SiO₂ film 107, a p-side electrode pad 109 connected to the p-side electrode 108 is formed. On the lower surface of the n-type InP substrate 101, an n-side electrode 110 composed of AuGeNi/AuNi is formed. In use, an incident light LI is input from one end surface of the i-type InGaAsP guiding layer 103 into the inside thereof, propagates along the ridge 130 and is output from the other end thereof as an outgoing light LO. The light input and output planes of the device are cleavage planes.

### Production Method of the device of Figure 1

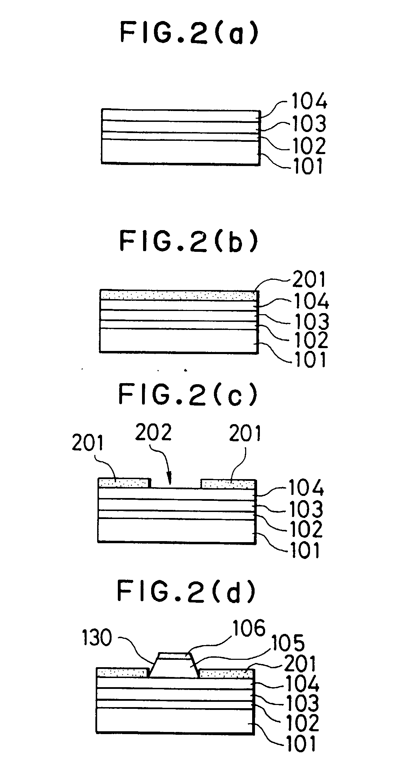

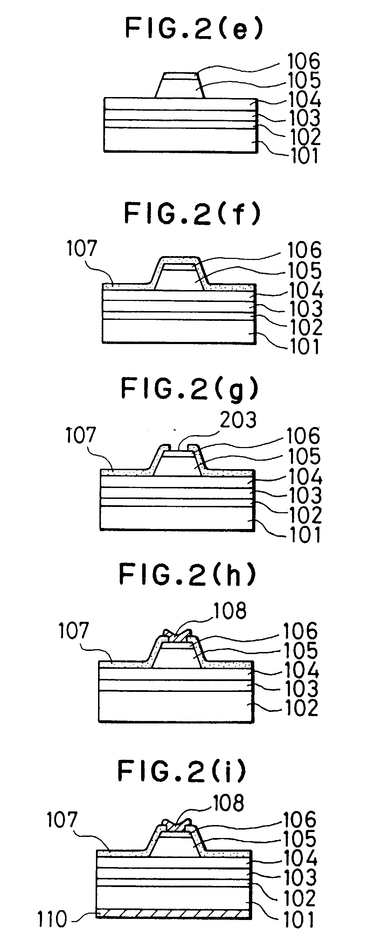

Next, a production method of the optical phase modulator described above will be explained while referring to Figs. 2a to 2i.

First, on the upper surface of the n-type InP substrate 101 of the (100) plane orientation, the n-type InP cladding layer 102 with a thickness of about 1 µm, the i-type InGaAsP guiding layer 103 with a thickness of 0.3 µm and with a wavelength composition of 1.15 µm and the i-type InP cladding layer 104 with a thickness of 0.3 µm are grown in this order by a metal organic vapor phase epitaxy (MOVPE) method (Fig. 2a).

Subsequently, the SiO₂ film 201 is formed on the i-type InP cladding layer 104 (Fig. 2b) and then patterned by a photolithography technique (Fig. 2c). The SiO₂ film 201 thus formed serves as a mask when the ridge 131 is selectively grown later in the process and so is patterned so as to form a stripe-shaped gap 202 at the position where the ridge 131 is to be formed (Fig. 2c). In this case, the gap 202 is extended along the [011] direction and has a width of 4 µm.

Next, using the MOVPE method again, the p-type InP cladding layer 105 with a thickness of 0.6 µm and then the p-type InGaAs capping layer 106 with a thickness of 0.2 µm are selectively grown on the stripe-shaped gap 202 (Fig. 2d). The ridge 131 thus formed is substantially trapezoidal in shape and its tilted side surfaces are smooth (111) B planes.

Next, after removal of the SiO₂ film 201 which provided the mask for selective crystal growth (Fig. 2e), the SiO₂ film 107 is formed on the i-type InP cladding layer 104 and the ridge 131 as a protective film (Fig. 2f). Subsequently, a window 203 is formed in the SiO₂ film 107 on the top surface of the ridge 131 to be used for forming the p-side electrode therethrough (Fig. 2g) and thereafter, the p-side electrode 108 composed of Ti and Au is formed in the window 203 (Fig. 2h).

Then, the lower surface of the n-type InP substrate 101 is polished to make it about 100 µm thick, and the n-side electrode 110 composed of AuGeNi/AuNi is formed thereon (Fig. 2i). Thereafter, a plurality of optical phase modulators, which have been formed on the substrate 101 as explained above, are individually isolated by a cleavage method and an anti-reflecting coating is made on the light input and output surfaces if necessary, thus finishing the production of the optical phase modulator.

### Operation of the device of Figure 1

The optical phase modulator described above operates as follows;

If a reverse bias voltage is applied across the p-side electrode 108 and n-side electrode 110, the i-type InGaAsP guiding layer 103 and i-type InP cladding layer 104 are subjected to an electric field, and the refractive indices of both the layers 103 and 104 vary due to the electrooptic effect (Pockels effect) induced by this electric field. Accordingly, if light that has a wavelength larger than the bandgap wavelength (λ_{g} = 1.15 µm) of the i-type InGaAsP guiding layer 103 is input to this modulator, it can be output from the output surface thereof with almost no loss, although the light can be subjected to phase modulation in the device due to the application of the reverse bias voltage.

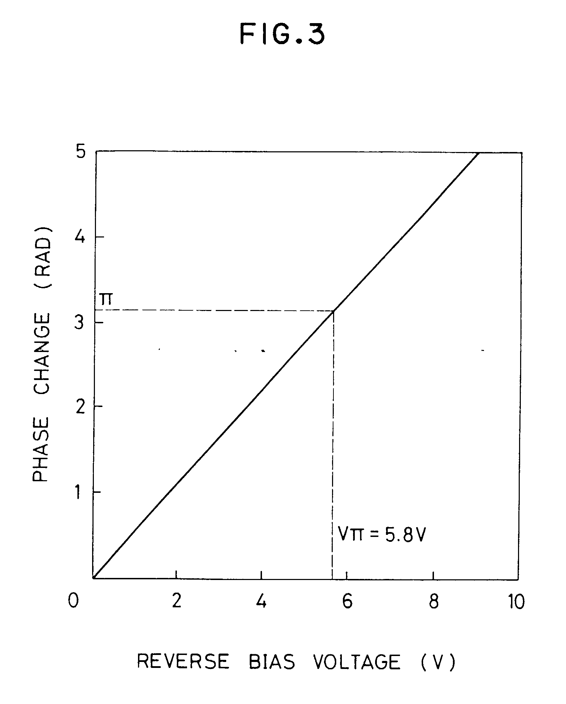

Fig. 3 is a graph showing the relation of the reverse bias voltage applied to the phase change when the total length of the optical phase modulator is 3 mm and light with a wavelength of 1.3 µm is applied. The voltage Vπ required to obtain a phase change of π (rad) is 5.8 V. Then the total length of the modulator is 3 mm, the modulator has a capacitance C of 2.2 pF, and in a system whose characteristic impedance is 50 Ω, a modulation-frequency bandwidth of about 3 GHz is obtained.

A feature of the optical phase modulator shown in Fig. 1 is that the ridge 131 is formed by selective crystal growth and, as a result, all surfaces including the tilted side surfaces 130 of the ridge 131 are smooth crystal planes. Therefore, the scattering losses that are unavoidable in an optical waveguide formed by an etching method can be eliminated. As a result, the optical modulator is operable at a greatly reduced level of loss as compared with the previously known ones already described above.

According to the experiments carried out by the inventors, excepting the fact that all layers were not doped, with a waveguide having the same structure as that of the optical phase modulator shown in Fig. 1, when the wavelength of a light applied was 1.3 µm, the propagation loss was as low as 0.07 dB/cm, which is extremely low. This is because scattering losses can be prevented by the production method of this embodiment. No dry etching is used and so damage to the etched surfaces is prevented. In addition, the InGaAsP waveguide layer with a wavelength composition of 1.15 µm is transparent to light of 1.3 µm wavelength, which confirms that no loss occurs.

In the first embodiment, in which doped layers are provided in order to apply the electric field to the waveguide layer, the losses in the propagated light are large compared with the above case in which all the layers are undoped. However, even when the total length is 3 mm, it is possible to make the propagation loss as low as 0.4 dB, which is extremely low.

### First Embodiment

Fig. 4 is a perspective view of an InGaAsP/InP directional-coupler-type optical switch according to a first embodiment of this invention. The switch shown in Fig. 4 has almost the same structure as the modulator shown in Fig. 1 except that two ridges are disposed close to each other, each of the two being divided into two sections by a groove, and these four ridge sections thus obtained having electrodes such that an electric field can be applied to each one independently.

On an n-type InP substrate 301 of the (100) plane orientation are grown, in order, an n-type InP cladding layer with a thickness of about 1 µm, an i-type InGaAsP guiding layer 303 with a thickness of 0.3 µm and a wavelength composition of 1.15 µm and an i-type InP cladding layer 304 with a thickness of 0.3 µm. On the i-type InP cladding layer 304 are formed two ridges 331 each of which has a p-type InP cladding layer 305 with a thickness of 0.6 µm and a p-type InGaAs capping layer 306 with a thickness of 0.2 µm grown so that each ridge is of substantially trapezoidal cross-section and extends linearly longitudinally of the substrate 301. Each ridge 331 is divided into two sections by providing a slit 340 at the longitudinal center thereof and each ridge extends along the [011] direction. The width of each ridge is 4 µm at its contact portion with the i-type InP cladding layer 304. Also, both sides 330 of each ridge 331 are smooth (111) B planes. Each ridge 331 is formed by a selective crystal growth method.

Both side surfaces 330 of each of the four sections of the two ridges 331 and the surface of the i-type InP cladding layer 304 not covered by the ridges 331 are covered with a SiO₂ film 307 as a protective film. The upper surfaces of the four sections of the ridges 331 on which the SiO₂ film 307 is not formed are covered with p-side electrodes 308a, 308b, 308c and 308d each being composed of Ti and Au. On the SiO₂ film 307, p-side electrode pads 309 are formed which are connected respectively to the electrodes 308a, 308b, 308c and 308d. Electric fields can be applied to each of the four sections independently.

On the lower surface of the n-type InP substrate 301, an n-side electrode 310 composed of AuGeNi/AuNi is formed. The light input and output planes are each cleavage planes. Incident light LI enters from one end surface of the i-type GaAsP guiding layer 303 (the input plane) into the inside thereof, propagates along one of the ridges 331 and is output from the other end (the output plane) as an outgoing light LOA or LOB.

In this directional-coupler-type optical switch, the ridges 331 are again formed by a selective growth method, so that all the surfaces of the ridges 331 are smooth crystal planes. This means that, as in the device of Figure 1, the device can operate at a greatly reduced level of losses compared with the conventional one described above.

### Production Method of First Embodiment

Since the production method of the optical switch of this first embodiment is similar to that of the optical phase modulator of Figure 1, the details will not be explained here. The only differences from the device of Figure 1 are the shape of the SiO₂ mask used when the ridges 331 are to be selectively grown and the shape of the p-side electrode.

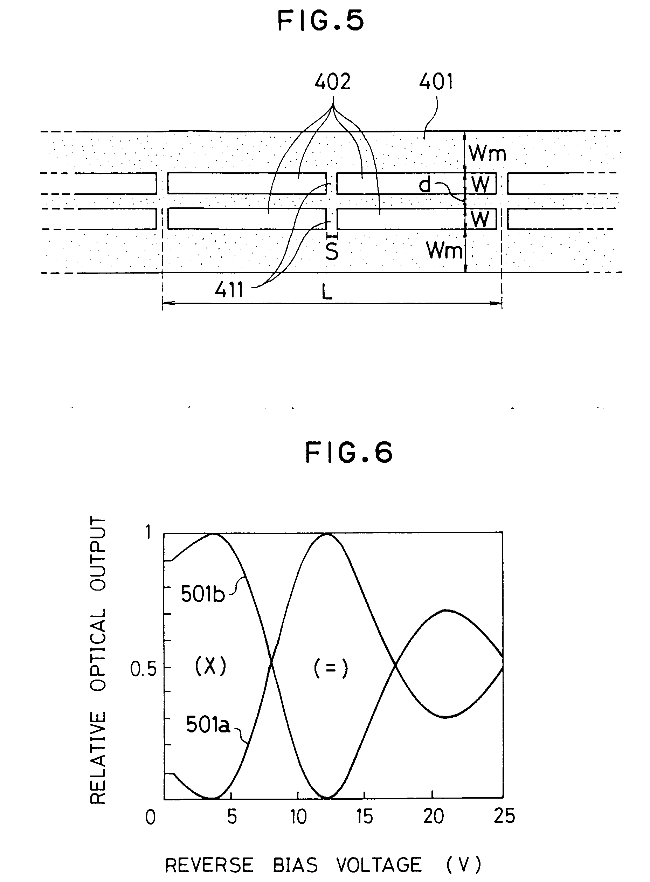

Fig. 5 is a top view of a SiO₂ mask to be used for selectively growing the ridges. In order to form the two closely-spaced ridges 331, two stripe-shaped gaps 402 each with a width W are positioned at a distance d from each other. In addition, in this first embodiment, in order to make the alternating Δ β operation possible, each gap 402 is divided into two sections by a stripe-shaped portion 411. The gaps 402 each having a width W of 4 µm are separated by a distance d of 2 µm. The SiO₂ film 401 for the selective growth use has a width Wm of 15 µm, the length of each single device is 4 mm and the stripe-shaped portion 411 has a a length S of 4 µm.

### Operation of First Embodiment

For the optical switch structured as above, the operation will be explained below.

If a reverse bias voltage is applied across the p-side electrodes 308a and 308d and the n-type electrode 310, an electric field is applied to the i-type InGaAsP guiding layer 303 and i-type InP cladding layer 304 just under the p-side electrodes 308a and 308d, so that the refractive indices of both the layers 303 and 304 vary due to the electrooptic effect (Pockels effect) induced by this electric field. Accordingly, by means of this reverse bias voltage, the coupling condition of the incident light LI to one waveguide and/or the other waveguide can be controlled.

Fig. 6 is a switching characteristic diagram of the optical switch of this embodiment for incident light with a wavelength of 1.3 µm. These switching characteristics were obtained in an optical switch with a total length of 4 mm and operated in an alternating Δβ operation. The relation between the relative optical outputs of outgoing light signals LOA and LOB and the reverse bias voltage are graphically shown. As shown in Fig. 6, a condition in which the incident light power is perfectly shifted from one waveguide to the other can be realized when the reverse bias voltage is 6.5 V (which is shown by the (×) mark in the figure) and on the other hand, a condition in which the light is output from the waveguide on the incident side can be realized when it is 14.2 V (which is shown by the (=) mark in the figure). In addition, the capacitance C is 3 pF and a switching frequency bandwidth of 2.2GHz can be maintained.

### Second Embodiment

Fig. 7 is a perspective view of an InGaAsP/InP Mach-Zehnder type optical modulator of a second embodiment of this invention. This optical modulator is substantially similar in structure to the phase modulator of Figure 1 but differs therefrom in that the modulator of this embodiment has a ridge divided into two sections at the central portion thereof, these two sections being individually isolated by slits therebetween, and the two sections thus divided respectively having electrodes for the independent application of electric fields to them.

As shown in Fig. 7, on an n-type InP substrate 501 of the (100) plane orientation are grown, in this order, an n-type InP cladding layer 502 with a thickness of about 1 µm, an i-type InGaAsP guiding layer 503 with a thickness of 0.3 µm and a wavelength composition of 1.15 µm, and an i-type InP cladding layer 504 with a thickness of 0.3 µm. On the i-type cladding layer 504, a p-type InP cladding layer 505 with a thickness of 0.6 µm and a p-type InGaAs capping layer 506 with a thickness of 0.2 µm are grown in this order thereby forming a ridge 531 which is cross - sectionally trapezoidal in shape and which extends longitudinally along the substrate 501.

The ridge 531 thus formed is divided into two sections at the central portion thereof, the two sections being individually isolated by four slits 540. The ridge 531 is oriented toward the [011] direction and has a width of 4 µm at its contact portion with the i-type InP cladding layer 504. Also, both side surfaces 530 of the ridge 531 are smooth (111) B planes. The ridge 531 is formed by a selective crystal growth method.

The ridge 531 is separated into a 3 dB light branching section 610, two phase modulator sections 611 and a light combination section 612. The two phase modulator sections 611 are spaced 20 µm apart from each other and each of them has a length of 3 mm. Each slit 540 provided for electrically isolating the phase modulator sections 611 has a width of 4 µm. The 3 dB light branching section 610 and the light combination section 612 are each substantially Y-shaped, the curved portion having a radius of curvature of 5 mm.

The surfaces of the 3 dB light branching section 610 and the light combination section 612, both side surfaces of the phase modulator sections 611 and the surface of the i-type InP cladding layer 504 on which the ridge 531 is not formed are covered with a SiO₂ film 507 as a protective film. The upper surfaces of the phase modulator sections 611 on which the SiO₂ film 507 is not formed are respectively covered with p-side electrodes 508 composed of Ti and Au. On the surface of the SiO₂ film 507 are formed p-side electrode pads 509 connected respectively to the p-side electrodes 508. It is possible to apply an electric field independently to the two phase modulator sections 611.

On the lower surface of the n-type InP substrate 501 an n-side electrode 510 composed of AuGeNi/AuNi is formed. The plane of incidence and the plane of output of light are both cleavage planes. Incident light LI enters from one end of the i-type InGaAsP guiding layer 503 into the inside thereof, then propagates along both of the phase modulation sections 611 and is output from the other end thereof.

In this second embodiment, the ridge 531 is formed by a selective crystal growth method. All surfaces of the ridge are smooth crystal planes and as a result, the same effects as those obtained in the first embodiment can be obtained.

### Production Method of Second Embodiment

The Mach-Zehnder-type optical modulator of this embodiment can be produced by substantially the same method as for the device of Figure 1 and for the first embodiment, thus no explanation is given here.

### Operation of Second Embodiment

The operation of this optical modulator will be explained below.

If a reverse bias voltage is applied across one of the p-side electrodes 508 and the n-type electrode 510, an electric field is applied to the i-type InGaAsP guiding 503 and i-type InP cladding layer 504 just thereunder, so that the refractive indices of the layers 503 and 504 vary due to the electrooptic effect (Pockels effect) induced by this electric field. As a result, one of two equally branched light signals derived from the incident light LI propagating through the 3 dB light branching section 610 is subjected to phase modulation due to the application of a reverse bias voltage and then, when the light signal thus phase-modulated is combined with the other light signal in the light combination section 612, this phase modulation is converted into intensity modulation. Accordingly, if a reverse bias voltage Vπ is applied to one p-side electrode 508 of the two phase modulator sections 611 so as to give a light signal therein a phase change of π (rad), the incident light LI can be extinguished.

Fig. 8 is a graph showing an extinction characteristic of the optical modulator of this embodiment when light with a wavelength of 1.3 µm is inputted. When the reverse bias voltage applied is zero (0) V, the light is transmitted, when it is 5.8 V, the light is extinguished, and when the voltage is further increased, such states are cyclically repeated. In addition, the capacitance C of this modulator is 2.2 pF and a modulation-frequency bandwidth of 3 GHz can be maintained.

In the above-described embodiments, optical guided-wave devices using semiconductor materials of the InP system were taken as the preferred examples, but not limited thereto and as a result, this invention can be applied to devices using semiconductor materials of other systems including the GaAs system. In addition, it is needless to say that the device configurations, that is, the thickness and composition of each layer and the size of waveguide, are not limited to those shown in these embodiments.

## Claims

1. A semiconductor optical guided-wave device comprising a semiconductor ridge (331, 531) formed by a selective crystal growth process on a semiconductor substrate portion (301-304, 501-504) to form an optical waveguide, and two or more electrodes (308,310,508,510) for applying an electric field to the optical waveguide,
characterised in that the ridge has side surfaces each of which is a (111) B plane, the substrate portion has a (100) plane orientation, the ridge extends along a [011] direction, and each of the side surfaces and the top surface of the ridge is a crystal plane formed by crystal growth,
and in that the ridge comprises two ridge sections (308a, 308b, 308c, 308d, 531) separated by a groove (340, 540), one or both ridge sections having an electrode such that an electric field can be applied to the or each ridge section independently.

2. A semiconductor optical guided-wave device as claimed in claim 1, in which the substrate portion comprises;
a first semiconductor cladding layer (302, 502), a semiconductor guiding layer (303, 503) and a second semiconductor cladding layer (304, 504) grown in this order on a semiconductor substrate (301, 501),
and the ridge comprises;
a third semiconductor cladding layer (305, 505) and a semiconductor capping layer (306, 506) grown in this order on the second semiconductor cladding layer.

3. A semiconductor optical guided-wave device as claimed in claim 1 or 2, in which one optical waveguide is provided and by applying a voltage to the electrodes, an electric field is applied to the optical waveguide, and incident light is subjected to phase modulation.

4. A semiconductor optical guided-wave device as claimed in claim 1 or 2, in which two optical waveguides (331) are formed close to each other and the electrodes are positioned so that an electric field can be applied to each optical waveguide independently, so as to form an optical switch.

5. A semiconductor optical guided-wave device as claimed in claim 1 or 2, in which the optical waveguide comprises a light branching section (610) and a light combination section (612) coupled by two phase mcdulator sections (611) and the electrodes are disposed so that an electric field can be applied to each phase mcdulator section independently, so that by applying electric fields to the two phase modulator sections incident light can be effectively switched.

6. A method for manufacturing a semiconductor optical guided-wave device comprising the steps of:
using a selective crystal growth process to form a semiconductor ridge on a semiconductor substrate pcrtion to form an optical waveguide; and
forming two or more electrodes for applying an electric field to the optical waveguide,
characterised in that the ridge has side surfaces each of which is a (111)B plane, the substrate portion has a (100) orientation, the ridge is formed along a [011] direction, and each of the side surfaces and the top surface of the ridge is a crystal plane formed by crystal growth,
and in that the ridge comprises two ridge sections separated by a groove, one or both ridge sections having an electrode such that an electric field can be applied to the or each ridge section independently.

7. A method as claimed in claim 6, in which the step of forming the ridge comprises a step of forming a mask over the substrate portion, the mask having an opening at a position where each ridge section is to be formed, and a step of crystallographically growing a material to form the ridge in the openings of the mask.

8. A method as claimed in claim 7, in which a dielectric film is used as the mask.

9. A method as claimed in claim 7 or 8, in which the mask is patterned by a photolithography technique.

10. A method as claimed in claim 6, 7, 8, cr 9, in which the substrate portion is formed by a process including the steps of growing a first semiconductor cladding layer, a semiconductor guiding layer and a second semiconductor cladding layer in this order on a semiconductor substrate, the ridge being formed on the second cladding layer.

11. A method as claimed in any of claims 6 to 10, in which the step of forming the ridge includes a step of growing a third semiconductor cladding layer and a semiconductor capping layer in this order.

12. A method as claimed In any of the claims 6 to 11, in wherein the step of forming the ridge is effected by a metal organic vapour phase epitaxy method.

## Patentansprüche

1. Optische Halbleiter-Wellenleitervorrichtung mit einem durch einen selektiven Kristallwachstumsprozeß auf einem Halbleitersubstratabschnitt (301-304, 501-504) gebildeten Halbleitersteg (331, 531), um einen optischen Wellenleiter zu bilden, und zwei oder mehr Elektroden (308,310,508,510) zum Anlegen eines elektrischen Feldes an den optischen Wellenleiter,
dadurch gekennzeichnet, daß der Steg Seitenoberflächen aufweist, von denen jede eine (111)-B-Ebene ist, der Substratabschnitt eine (100)-Ebenenorientierung aufweist, der Steg sich längs einer [011]-Richtung erstreckt, und jede der Seitenoberflächen und der oberen Oberfläche des Steges eine durch Kristallwachstum gebildete Kristallebene ist, und daß der Steg zwei Stegteilstücke (308a,308b,308c,308d, 531) aufweist, die durch einen Einschnitt (340,540) getrennt sind, ein oder beide Stegteilstücke eine Elektrode aufweisen, so daß ein elektrisches Feld an das oder jedes Stegteilstück unabhängig angelegt werden kann.

2. Optische Halbleiter- Wellenleitervorrichtung nach Anspruch 1, in der der Substratabschnitt aufweist:
eine erste Halbleiter-Plattierungslage (302, 502), eine Halbleiterführungslage (303, 503) und eine zweite Halbleiter-Plattierungslage (304, 504), die in dieser Reihenfolge auf einem Halbleitersubstrat (301, 501) gezüchtet werden, und der Steg aufweist:
eine dritte Halbleiter-Plattierungslage (305, 505) und
eine Halbleiter-Abdecklage (306, 506), die in dieser Reihenfolge auf der zweiten Halbleiter-Plattierungslage gezüchtet werden.

3. Optische Halbleiter-Wellenleitervorrichtung nach Anspruch 1 oder 2, in der ein optischer Wellenleiter vorgesehen ist und durch Anlegen einer Spannung an die Elektroden ein elektrisches Feld an den optischen Wellenleiter angelegt wird und einfallendes Licht einer Phasenmodulation unterzogen wird.

4. Optische Halbleiter-Wellenleitervorrichtung nach Anspruch 1 oder 2, in der zwei optische Wellenleiter (331) nahe zueinander ausgebildet sind und die Elektroden so angeordnet sind, daß ein elektrisches Feld unabhängig an jeden optischen Wellenleiter angelegt werden kann, um einen optischen Schalter zu bilden.

5. Optische Halbleiter- Wellenleitervorrichtung nach Anspruch 1 oder 2, in der der optische Wellenleiter ein Lichtverzweigungsteilstück (610) und ein Lichtververeinigungsteilstück (612) aufweist, die durch zwei Phasenmodulatorteilstücke (611) gekoppelt sind, und die Elektroden so angeordnet sind, daß ein elektrisches Feld unabhängig an jedes Phasenmodulatorteilstück angelegt werden kann, so daß durch Anlegen elektrischer Felder an die beiden Phasenmodulatorteilstücke einfallendes Licht wirksam geschaltet werden kann.

6. Verfahren zur Herstellung einer optischen Halbleiter-Wellenleitervorrichtung, das die Schritte aufweist:
Benutzung eines selektiven Kristallwachstumsprozesses, um einen Halbleitersteg auf einem Halbleitersubstratabschnitt zu bilden, um einen optischen Wellenleiter zu bilden, und Bilden von zwei oder mehr Elektroden zum Anlegen eines elektrischen Feldes an den optischen Wellenleiter,
dadurch gekennzeichnet, daß der Steg Seitenoberflächen aufweist, von denen jede eine (111)-B-Ebene ist, der Substratabschnitt eine (100)-Orientierung aufweist, der Steg längs einer [011]-Richtung gebildet wird, und jede der Seitenoberflächen und der oberen Oberfläche des Steges eine durch Kristallwachstum gebildete Kristallebene ist,
und daß der Steg zwei Stegteilstücke aufweist, die durch einen Einschnitt getrennt sind, wobei ein oder beide Stegteilstücke eine Elektrode aufweisen, so daß ein elektrisches Feld an das oder jedes Stegteilstück unabhängig angelegt werden kann.

7. Verfahren nach Anspruch 6, in dem der Schritt des Bildens des Steges einen Schritt des Bildens einer Maske über dem Substratabschnitt, wobei die Maske eine Öffnung an einer Stelle aufweist, wo jedes Stegteilstück gebildet werden soll, und einen Schritt des kristallographischen Züchtens eines Materials, um den Steg in den Öffnungen der Maske zu bilden, aufweist.

8. Verfahren nach Anspruch 7, in dem ein dielektrischer Film als die Maske verwendet wird.

9. Verfahren nach Anspruch 7 oder 8, in dem die Maske durch eine Photolithographietechnik gemustert wird.

10. Verfahren nach Anspruch 6, 7, 8 oder 9, in dem der Substratabschnitt durch einen Prozeß gebildet wird, der die Schritte des Züchtens einer ersten Halbleiter-Plattierungslage, einer Halbleiterführungslage und einer zweiten Halbleiter-Plattierungslage in dieser Reihenfolge auf einem Halbleitersubstrat aufweist, wobei der Steg auf der zweiten Plattierungslage gebildet wird.

11. Verfahren nach einem der Ansprüche 6 bis 10, in dem der Schritt des Bildens des Steges einen Schritt des Züchtens einer dritten Halbleiter-Plattierungslage und einer Halbleiter-Abdecklage in dieser Reihenfolge aufweist.

12. Verfahren nach einem der Ansprüche 6 bis 11, in dem der Schritt des Bildens des Steges durch ein metallorganisches Dampfphasen-Epitaxie-Verfahren ausgeführt wird.

## Revendications

1. Dispositif semi-conducteur à guide d'onde optique comprenant une nervure semi-conductrice (331, 531) formée par un procédé de croissance sélective de cristal sur une portion de substrat semi-conducteur (301-304, 501-504) afin de former un guide d'onde optique, et deux électrodes ou plus (308, 310, 508, 510) pour appliquer un champ électrique au guide d'onde optique,
caractérisé en ce que la nervure comporte des surfaces latérales dont chacune est un plan (111)B, la portion de substrat a une orientation selon un plan (100), la nervure s'étend selon une direction [011], et chacune des surfaces latérales et de la surface supérieure de la nervure est un plan de cristal formé par croissance de cristal, et en ce que la nervure comprend deux sections de nervure (308a, 308b, 308c, 308d, 531) séparées par une gorge (340, 540), l'une des deux ou les deux sections de nervure ayant une électrode telle qu'un champ électrique peut être appliqué à la ou à chaque section de nervure, de façon indépendante.

2. Dispositif semi-conducteur à guide d'onde optique selon la revendication 1, dans lequel la portion de substrat comprend
une première couche de confinement semi-conductrice (302, 502), une couche de guidage semi-conductrice (303, 503) et une seconde couche de confinement semi-conductrice (303, 503), que l'on fait croître dans cet ordre sur un substrat semi-conducteur (301, 501),
et la nervure comprend
une troisième couche de confinement semi-conductrice (305, 505) et une couche de recouvrement semi-conductrice (306, 506), que l'on fait croître dans cet ordre sur la seconde couche de confinement semi-conductrice.

3. Dispositif semi-conducteur à guide d'onde optique selon la revendication 1 ou 2, dans lequel un guide d'onde optique est prévu et, en appliquant une tension aux électrodes, un champ électrique est appliqué au guide d'onde optique, et une lumière incidente est soumise à une modulation de phase.

4. Dispositif semi-conducteur à guides d'onde optiques selon la revendication 1 ou 2, dans lequel deux guides d'onde optiques (331) sont formés à proximité l'un de l'autre et les électrodes sont positionnées de telle sorte qu'un champ électrique peut être appliqué, de façon indépendante, à chaque guide d'onde optique, de manière à former un commutateur optique.

5. Dispositif semi-conducteur à guide d'onde optique selon la revendication 1 ou 2, dans lequel le guide d'onde optique comprend une section de bifurcation de lumière (610) et une section de combinaison de lumières (612), couplées par deux sections de modulateur de phase (611), et les électrodes sont disposées de telle sorte qu'un champ électrique peut être appliqué, de façon indépendante, à chaque section de modulateur de phase, de sorte qu'en appliquant des champs électriques aux deux sections de modulateur de phase, une lumière incidente peut être efficacement commutée.

6. Procédé de fabrication d'un dispositif semi-conducteur à guide d'onde optique, comprenant les étapes consistant :
à utiliser un procédé de croissance sélective de cristal pour former une nervure semi-conductrice formée par un procédé de croissance sélective de cristal sur une portion de substrat semi-conducteur afin de former un guide d'onde optique ; et
à former deux électrodes ou plus pour appliquer un champ électrique au guide d'onde optique,
caractérisé en ce que la nervure comporte des surfaces latérales dont chacune est un plan (111)B, la portion de substrat a une orientation selon un plan (100), la nervure est formée selon une direction [011] et chacune des surfaces latérales et de la surface supérieure de la nervure est un plan de cristal formé par croissance de cristal, et en ce que la nervure comprend deux sections de nervure séparées par une gorge, l'une des deux ou les deux sections de nervure ayant une électrode telle qu'un champ électrique peut être appliqué à la ou à chaque section de nervure, de façon indépendante.

7. Procédé selon la revendication 6, dans lequel l'étape consistant à former la nervure comprend une étape consistant à former un masque par dessus la portion de substrat, le masque ayant une ouverture en une position où chaque section de nervure doit être formée, et une étape consistant à faire croître par voie cristallographique un matériau pour former la nervure dans les ouvertures du masque.

8. Procédé selon la revendication 7, dans lequel un film diélectrique est utilisé en tant que masque.

9. Procédé selon la revendication 7 ou 8, dans lequel le masque est configuré par une technique de photolithographie.

10. Procédé selon la revendication 6, 7, 8 ou 9, dans lequel la portion de substrat est formée par un procédé incluant les étapes consistant à faire croître une première couche de confinement semi-conductrice, une couche de guidage semi-conductrice et une seconde couche de confinement semi-conductrice, dans cet ordre sur un substrat semi-conducteur, la nervure étant formée sur la seconde couche de confinement.

11. Procédé selon l'une quelconque des revendications 6 à 10, dans lequel l'étape consistant à former la nervure inclut une étape consistant à faire croître une troisième couche de confinement semi-conductrice et une couche de recouvrement semi-conductrice, dans cet ordre.

12. Procédé selon l'une quelconque des revendications 6 à 11, dans lequel l'étape consistant à former la nervure s'effectue par un procédé d'épitaxie en phase vapeur aux organo-métalliques.
